# EUROPEAN PATENT SPECIFICATION

(11) **EP 2 419 607 B1**
(45) Date of publication and mention of the grant of the patent: **25.11.2015**
(21) Application number: 10763966.8
(22) Date of filing: 19.03.2010
(51) Int. Cl.: F01B 3/04, F01B 9/06, F02B 75/26, F02B 75/28

(54) **A CO-AXIAL CRANKLESS ENGINE**
KURBELLOSER KOAXIALMOTOR
MOTEUR COAXIAL SANS MANIVELLE

(30) Priority: 16.04.2009 AU 2009901630
(43) Date of publication of application: 22.02.2012
(73) Proprietor: Powell, Darren, Aylmerton, NSW 2575 (AU)
(72) Inventor: Powell, Darren, Aylmerton, NSW 2575 (AU)
(74) Representative: Walker, Ross Thomson
(86) International application number: PCT/AU2010/000324
(87) International publication number: WO 2010/118457

(56) References cited:
- EP-A1- 0 153 528
- US-A- 1 876 506
- US-A- 1 876 506
- US-A- 2 457 183
- US-A- 4 487 108
- US-A- 4 553 508
- US-A- 5 031 581
- US-A- 5 031 581
- US-A- 5 551 383
- US-B1- 6 619 244

## Description

### Field of the Invention

The present invention relates to engines to do work and in particular to a co-axial/bi-directional crankless engine.

### Background of the Invention

Reciprocating engines are common throughout the world and typically use a crank mechanism to convert reciprocating motion into rotary motion to drive a machine such as a vehicle. Due to the reciprocating nature of such engines, energy is lost during motion which reduces the efficiency of the engine and causes imbalances which result in wear of the components, unavoidable vibration of components and excessive noise.

There have been a number of attempts at addressing these issues. For example: rotary engines, orbital engines, split cycle engines, cam engines, axial engines, barrel engines - all representing engines whereby the crankshaft has been replaced by some other mechanism to convert reciprocating motion to rotational motion where many of the problems associated with the inherently out-of-balance crankshaft are alleviated to some extent.

Such engines can drive machines which include blades or rotors or the like at the end of a drive shaft to propel the machine (for example, a boat, plane, submarine, helicopter or the like). Especially in military machines, co-axial rotors have been utilized to turn a pair of rotors or propellers in opposite directions but are mounted on a single shaft with the same axis of rotation except for contra-rotating devices where the rotors or propellers are rotating on separate shafts on separate axes in opposite directions. Either configuration requires a gearbox of some description to convert a single shaft operation to two counter-rotating or coaxial shafts. A planetary gearset or similar gearbox is employed to convert the rotation of the drive shaft from the engine to a co-axial or counter-rotating shaft arrangement to drive the co-axial or counter-rotating propellers or rotors. Such systems are found in marine craft, for example. The two propellers or rotors are arranged one behind the other and the power is transferred from the engine via the gear transmission. There is a reduction in rotational flow providing a maximum amount of air or water uniformly through the propellers or rotors providing higher performance and less energy loss. Such systems also reduce or eliminate the amount of torque created by existing single propeller and rotor systems. However, these engines and associated transmission systems are typically expensive, mechanically complex, weigh more, cost more to maintain, are noisy and are prone to failure. For example, in a co-axial helicopter, the gearbox and rotor hub are extremely complicated with many linkages, plates and other parts that can fail due to the need to drive two rotor disks in opposite directions simultaneously.

It was suggested in AU 629,238 (the contents of which are incorporated herein by reference) engine complexity could be reduced by providing a crankless reciprocating engine. Such an engine could comprise at least one cylinder, two opposed pistons arranged to reciprocate in opposite directions along the longitudinal axis of each cylinder, the pistons defining a common combustion chamber therebetween, a main shaft disposed parallel to, and spaced from, the longitudinal axis of each cylinder, and two axially spaced, endless, substantially sinusoidal tracks carried by the main shaft for rotation therewith, said tracks being interconnected with said pistons so that reciprocation of the pistons imparts rotary motion to the main shaft. The engine further comprises a small charge and ignition chamber in communication with the common combustion chamber, means to admit fuel into the charge and ignition chamber to form a fuel rich charge therein and to form with air in the common combustion chamber a fuel lean charge therein. An ignition device is located in the charge and ignition chamber for ignition of the fuel rich charge therein.

However, with the above proposed engine there is still a need to resolve the problems associated with spinning two shafts concentrically in opposite directions on the same axis and problems with wear and complexity. Also, a gear box is required to convert the power and torque being delivered from a single shaft engine as discussed above to co-axial power.

Accordingly, there is a need to provide an engine which delivers full power and torque at the required RPM of the machine to concentric, coaxial shafts without the need for a gearbox.

### Object of the Invention

It is an object of the present invention to substantially overcome or at least ameliorate one or more of the disadvantages of the prior art, or to at least provide a useful alternative.

### Summary of the Invention

There is firstly disclosed herein a co-axial crankless engine having:
at least one cylinder defining a longitudinally extending axis;
a pair of pistons positioned to reciprocate in opposite directions along the longitudinal axis of said cylinder, a space between said pistons defining a common combustion chamber;
a first shaft positioned substantially parallel to and spaced laterally from the longitudinal axis of said cylinder;
a second shaft positioned substantially parallel to and spaced laterally from the longitudinal axis of said cylinder, said second shaft having a longitudinally extending bore through which said first shaft can extend and rotate, each said piston being connected to an axially spaced cam, a first said cam being supported by said first shaft, a second said cam being supported by said second shaft,
whereby in use reciprocation of said pistons imparts on respective shafts rotating motion in opposite directions to drive said engine.

Preferably, including a plurality of cylinders located about the shafts.

Preferably, including two cylinders and four pistons, the pistons in one cylinder operating 180° out of phase with the pistons in the other cylinder.

Preferably, including three cylinders and six pistons arranged in a delta formation equally spaced about the shafts.

Preferably, including four or more cylinders.

Preferably, the cams are mirror images of each other.

Preferably, the cams are single lobe, multi-lobe, swash plate, wobble plate or sinusoidal cams.

Preferably, the pistons in opposite cylinders located on the same side of the engine as each other are connected to the same cam.

Preferably, the pistons drive the cams in opposition directions creating coaxial counter-rotation of the shafts.

Preferably, the first shaft is supported by a first frame, the second shaft being supported by a second frame.

Preferably, including a first gear operatively associated with said first shaft.

Preferably, including a second gear operatively associated with said second shaft.

Preferably, the first and second gears attached to said shafts are linked by means to ensure timing synchronisation between the shafts.

Preferably, said means is a gear which provides a drive for a power take-off shaft at about 90° to the first and second shafts.

### Brief Description of the Drawing

A preferred embodiment of the invention will now be described, by way of example only, with reference to the accompanying drawing, wherein:

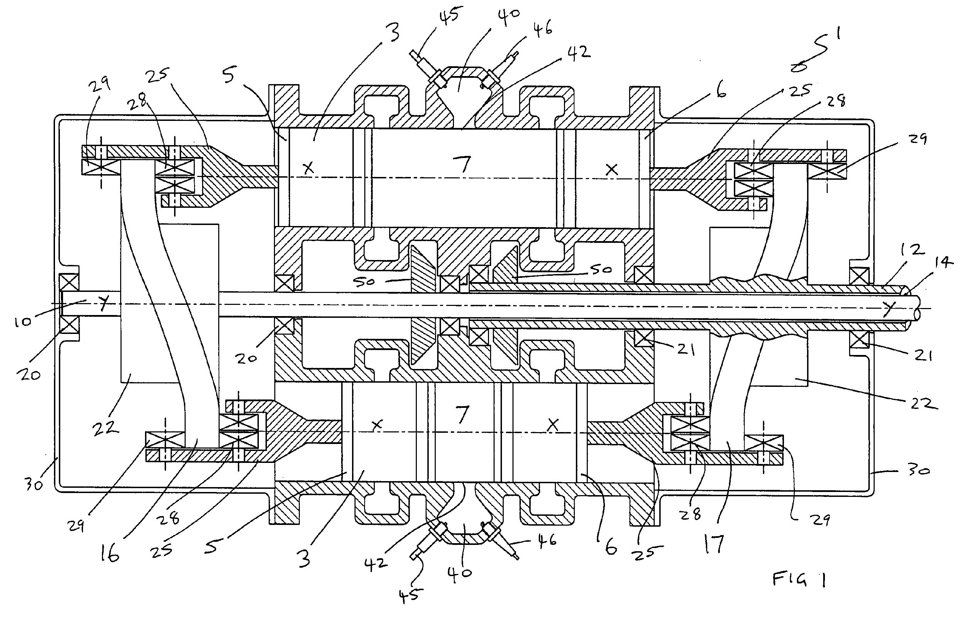

Figure 1 is a cross-sectional side view of an embodiment of the invention.

### Detailed Description of the Preferred Embodiments

In Figure 1 there is disclosed a coaxial crankless engine 1 having at least one cylinder 3 defining a longitudinal axis XX. A pair of pistons 5, 6 are positioned to reciprocate in opposite directions along the longitudinal axis XX of the cylinder 3. A space 7 between the pistons 5 defines a common combustion chamber 7. A first shaft 10 is positioned substantially parallel to and laterally spaced from the longitudinal axis XX of the cylinder 3. A second shaft 12 is also positioned substantially parallel to and laterally spaced from the longitudinal axis XX of the cylinder 3. The second shaft 12 has a longitudinally extending bore 14 through which the first shaft 10 can extend and rotate. The first shaft 10 rotates in the opposite direction to the second shaft 12. The pistons 5, 6 are connected to two axially spaced endless cams 16, 17. The first cam 16 is supported by the first shaft 10 and connected to the piston 5. The second cam 17 is supported by the second shaft 12 and connected to the piston 6. In use, reciprocation of the pistons 5, 6 imparts on respective shafts 10, 12 rotating motion in opposite directions to drive the engine 1.

The basic operation of the engine shown in Figure 1 acts like a typical internal combustion engine. However, the engine 1 comprises two cylinders 3 disposed on opposite sides of the first shaft 10 and second shaft 12 which are mounted for rotation in opposite directions about the horizontal axis XX in bearings 20 and 21. Herein, the terms "axial" and "radial" have reference to the longitudinal axis YY of first and second shafts 10, 12. Fixed to the first shaft 10 and the second shaft 12 for rotation therewith is a pair of spaced wheels 22 having similar outer cylindrical surfaces. Each wheel 22 supports the cams 16, 17 which extend radially outwardly from the cylindrical surface of the respective wheel 22. The cams 16, 17 are contoured in an axial direction so that they trace an endless path around the cylindrical surface of wheels 22. In the preferred form, the cams 16, 17 can be lobe cam profiles, swash plates, wobble plates, sinusoidal cams or such shapes which convert reciprocating motion to rotational motion to drive shafts 10, 12. The two cams 16, 17 are identical, one being the mirror image of the other.

Each cylinder 3 and its reciprocating pistons 5, 6 are of the same construction. However, referring to Figure 1 the pistons 5, 6 in the top cylinder 3 operate 180° out of phase with the pistons 5, 6 in the bottom cylinder 3. The opposed pistons 5, 6 are adapted to reciprocate in opposite directions along the longitudinal axis XX of cylinder 3. Rigidly or pivotally connected to each piston 5, 6 is a connecting rod 25 which is adapted to cooperate with the cams 16, 17 by way of one, two or more drive bearings 28 and a tail bearing 29. The engine is closed at each end by sump casing 30. Any number of bearings may be utilized.

As shown in Figure 1, the distal end of connecting rod 25 is bifurcated to provide a mounting for one, two or more drive bearing 28 on each arm. The outer of the bifurcated arms extends beyond the cam 16 to provide a mounting for tail bearing 29.

Pistons 5, 6 define a common combustion chamber 7 therebetween. Mounted adjacent to each cylinder 3 is a charge and ignition chamber 40 (fuel rich chamber) provided with an orifice 42 for communication with the combustion chamber 7. A spark plug 45 is mounted on chamber 40 for ignition of fuel therein. A fuel injector 46 controls the admission of fuel into the charge and ignition chamber 40. The combustion process in the engine would typically be like an existing engine and can also be compression ignition as required.

The engine 1 may also include gears 50 or the like. The gears 50 are bevel or hypoidal gears which marry to a common straight bevel or hypoidal gear (not shown) sitting directly on top of gears 50 and the first and second shafts 10, 12 locking the rotation of the co-axial shafts 10, 12 together. The gear (not shown) also provides power take-off to an ancillary shaft at 90° to the co-axial shafts 10, 12. This shaft arrangement can be duplicated around the engine 1 as required. The gear design may vary depending on the requirements for rotation speed, degree of gear reduction and torque loading of the ancillary device it is driving such as a pusher propeller and by varying the timing of this gearing system, yaw control may be improved in some applications.

Although the invention has been described with reference to specific examples, it will be appreciated by those skilled in the art that the invention may be embodied in many other forms.

## Claims

1. A co-axial crankless engine having:
at least one cylinder defining a longitudinally extending axis;
a pair of pistons positioned to reciprocate in opposite directions along the longitudinal axis of said cylinder, a space between said pistons defining a common combustion chamber;
a first shaft positioned substantially parallel to and spaced laterally from the longitudinal axis of said cylinder;
a second shaft positioned substantially parallel to and spaced laterally from the longitudinal axis of said cylinder, said second shaft having a longitudinally extending bore through which said first shaft can extend and rotate, each said piston being connected to an axially spaced cam, a first said cam being supported by said first shaft, a second said cam being supported by said second shaft,
whereby in use reciprocation of said pistons imparts on respective shafts rotating motion in opposite directions to drive said engine.

2. The co-axial crankless engine according to claim 1, further including a plurality of cylinders located about the shafts.

3. The co-axial crankless engine according to claim 1, further including two cylinders and four pistons, the pistons in one cylinder operating 180° out of phase with the pistons in the other cylinder.

4. The co-axial crankless engine according to claim 1, further including three cylinders and six pistons arranged in a delta formation equally spaced about the shafts.

5. The co-axial crankless engine according to claim 1, further including four or more cylinders.

6. The co-axial crankless engine according to claim 1, wherein the cams are mirror images of each other.

7. The co-axial crankless engine according to claim 1, wherein the cams are single lobe, multi-lobe, swash plate, wobble plate or sinusoidal cams.

8. The co-axial crankless engine according to claim 1, wherein the pistons in opposite cylinders located on the same side of the engine as each other are connected to the same cam.

9. The co-axial crankless engine according to claim 1, wherein the pistons drive the cams in opposition directions creating coaxial counter-rotation of the shafts.

10. The co-axial crankless engine according to claim 1, wherein the first shaft is supported by a first frame, the second shaft being supported by a second frame.

11. The co-axial crankless engine according to claim 1, further including a first gear operatively associated with said first shaft.

12. The co-axial crankless engine according to claim 11, further including a second gear operatively associated with said second shaft.

13. The co-axial crankless engine according to claim 12, wherein the first and second gears attached to said respective first and second shafts are linked by means to ensure timing synchronization between the shafts.

14. The co-axial crankless engine according to claim 13, wherein said means is a gear which provides a drive for a power take-off shaft located at about 90° to the first and second shafts.

## Patentansprüche

1. Kurbelloser Koaxialmotor, aufweisend:
zumindest einen Zylinder, der eine längs verlaufende Achse definiert;
ein Paar Kolben, die positioniert sind, um sich in entgegengesetzte Richtungen entlang der Längsachse des besagten Zylinders hin- und herzubewegen, wobei ein Raum zwischen besagten Kolben eine gemeinsame Brennkammer definiert;
eine erste Welle, die im Wesentlichen parallel zu und seitlich beabstandet von der Längsachse des besagten Zylinders positioniert ist;
eine zweite Welle, die im Wesentlichen parallel zu und seitlich beabstandet von der Längsachse des besagten Zylinders positioniert ist, wobei besagte zweite Welle eine längs verlaufende Bohrung aufweist, durch welche hindurch besagte erste Welle verlaufen und sich drehen kann, wobei jeder besagte Kolben mit einem axial beabstandeten Nocken verbunden ist, wobei ein erster besagter Nocken von besagter erster Welle getragen wird, wobei ein zweiter besagter Nocken von besagter zweiter Welle getragen wird,
wodurch, bei Verwendung, die Hin- und Herbewegung besagter Kolben jeweiligen Wellen eine Drehbewegung in entgegengesetzte Richtungen zum Antreiben des besagten Motors erteilt.

2. Kurbelloser Koaxialmotor nach Anspruch 1, ferner beinhaltend eine Mehrzahl von um die Wellen herum befindlichen Zylindern.

3. Kurbelloser Koaxialmotor nach Anspruch 1, ferner beinhaltend zwei Zylinder und vier Kolben, wobei die Kolben in einem Zylinder um 180 ° phasenversetzt zu den Kolben in dem anderen Zylinder arbeiten.

4. Kurbelloser Koaxialmotor nach Anspruch 1, ferner beinhaltend drei Zylinder und sechs Kolben, die in einer Dreieckformation abstandsgleich um die Wellen herum angeordnet sind.

5. Kurbelloser Koaxialmotor nach Anspruch 1, ferner beinhaltend vier oder mehr Zylinder.

6. Kurbelloser Koaxialmotor nach Anspruch 1, worin die Nocken zueinander spiegelbildlich sind.

7. Kurbelloser Koaxialmotor nach Anspruch 1, worin die Nocken einlappige, mehrlappige, Taumelscheiben-, Taumelplatten- oder sinusförmige Nocken sind.

8. Kurbelloser Koaxialmotor nach Anspruch 1, worin die Kolben in gegenüberliegenden Zylindern, die auf derselben Seite des Motors wie einander befindlich sind, mit demselben Nocken verbunden sind.

9. Kurbelloser Koaxialmotor nach Anspruch 1, worin die Kolben die Nocken in Gegenrichtungen antreiben, wobei eine koaxiale Gegendrehung der Wellen erzeugt wird.

10. Kurbelloser Koaxialmotor nach Anspruch 1, worin die erste Welle von einem ersten Gestell abgestützt ist, wobei die zweite Welle von einem zweiten Gestell abgestützt ist.

11. Kurbelloser Koaxialmotor nach Anspruch 1, ferner beinhaltend ein erstes, operativ mit besagter erster Welle assoziiertes Zahnrad.

12. Kurbelloser Koaxialmotor nach Anspruch 11, ferner beinhaltend ein zweites, operativ mit besagter zweiter Welle assoziiertes Zahnrad.

13. Kurbelloser Koaxialmotor nach Anspruch 12, worin das erste und das zweite Zahnrad, die an besagter jeweils erster und zweiter Welle angebracht sind, durch ein Mittel verbunden sind, das eine zeitliche Synchronisation zwischen den Wellen gewährleistet.

14. Kurbelloser Koaxialmotor nach Anspruch 13, worin besagtes Mittel ein Zahnrad ist, das einen Antrieb für eine Abtriebswelle bereitstellt, die sich im Winkel von etwa 90 ° zur ersten und zur zweiten Welle befindet.

## Revendications

1. Moteur coaxial sans manivelle, comprenant :
au moins un cylindre définissant un axe s'étendant longitudinalement ; une paire de pistons positionnés de manière à être animés d'un mouvement de va-et-vient dans des directions opposées le long de l'axe longitudinal dudit cylindre, un espace entre lesdits pistons définissant une chambre de combustion commune ;
un premier arbre positionné pratiquement parallèlement à et espacé latéralement de l'axe longitudinal dudit cylindre ;
un second arbre positionné pratiquement parallèlement à et espacé latéralement de l'axe longitudinal dudit cylindre, ledit second arbre ayant un alésage s'étendant longitudinalement par lequel ledit premier arbre peut s'étendre et tourner, lesdits pistons étant connectés à des première et seconde cames et espacés axialement desdites cames, ladite première came étant soutenue par ledit premier arbre, et ladite seconde came étant soutenue par ledit second arbre,
dans lequel, lors de l'utilisation, le mouvement de va-et-vient desdits pistons imprime sur les arbres respectifs un mouvement de rotation dans des directions opposées afin d'entraîner ledit moteur.

2. Moteur coaxial sans manivelle selon la revendication 1, comprenant en outre une pluralité de cylindres situés autour des arbres.

3. Moteur coaxial sans manivelle selon la revendication 1, comprenant en outre deux cylindres et quatre pistons, les pistons d'un cylindre fonctionnant en déphasage de 180° par rapport aux pistons de l'autre cylindre.

4. Moteur coaxial sans manivelle selon la revendication 1, comprenant en outre trois cylindres et six pistons disposés dans une configuration en triangle et espacés de manière équidistante par rapport aux arbres.

5. Moteur coaxial sans manivelle selon la revendication 1, comprenant en outre au moins quatre cylindres.

6. Moteur coaxial sans manivelle selon la revendication 1, dans lequel les cames sont des images en miroir l'une de l'autre.

7. Moteur coaxial sans manivelle selon la revendication 1, dans lequel les cames sont des cames à bossage simple, des cames à bossage multiple, des cames plates, des plateaux oscillants ou des cames sinusoïdales.

8. Moteur coaxial sans manivelle selon la revendication 1, dans lequel les pistons dans des cylindres opposés situés du même côté du moteur sont connectés à la même came.

9. Moteur coaxial sans manivelle selon la revendication 1, dans lequel les pistons entraînent les cames dans des directions opposées, créant une contre-rotation coaxiale des arbres.

10. Moteur coaxial sans manivelle selon la revendication 1, dans lequel le premier arbre est soutenu par une première structure, le second arbre étant soutenu par une seconde structure.

11. Moteur coaxial sans manivelle selon la revendication 1, comprenant en outre un premier engrenage associé de manière fonctionnelle audit premier arbre.

12. Moteur coaxial sans manivelle selon la revendication 11, comprenant en outre un second engrenage associé de manière fonctionnelle audit second arbre.

13. Moteur coaxial sans manivelle selon la revendication 12, dans lequel les premier et second engrenages accouplés auxdits premier et second arbres respectifs sont liés par un moyen garantissant la synchronisation entre les arbres.

14. Moteur coaxial sans manivelle selon la revendication 13, dans lequel ledit moyen est un engrenage qui constitue un entraînement pour un arbre de prise de force situé à environ 90° par rapport aux premier et second arbres.
